# EUROPÄISCHE PATENTSCHRIFT

(11) **EP 2 156 414 B1**
(45) Veröffentlichungstag und Bekanntmachung des Hinweises auf die Patenterteilung: **13.01.2021**
(21) Anmeldenummer: 08758982.6
(22) Anmeldetag: 03.06.2008
(51) Int. Cl.: G07D 7/04

(54) **SICHERHEITSELEMENT ZUR ABSICHERUNG VON WERTDOKUMENTEN**
SECURITY ELEMENT FOR SECURING DOCUMENTS OF VALUE
ELÉMENT DE SÉCURITÉ POUR LA PROTECTION DE DOCUMENTS DE VALEUR

(30) Priorität: 04.06.2007 DE 102007025939
(43) Veröffentlichungstag der Anmeldung: 24.02.2010
(73) Patentinhaber: Giesecke+Devrient Currency Technology GmbH, 81677 München (DE)
(72) Erfinder: SCHÜTZMANN, Jürgen, 85276 Pfaffenhofen (DE); RAUSCHER, Wolfgang, 81677 München (DE); HEIM, Manfred, 83646 Bad Tölz (DE); KRETSCHMAR, Friedrich, 81929 München (DE); PITTER, Frank, 85630 Grasbrunn (DE); STEIN, Dieter, 83607 Holzkirchen (DE)
(86) Internationale Anmeldenummer: PCT/EP2008/004419
(87) Internationale Veröffentlichungsnummer: WO 2008/148523

(56) Entgegenhaltungen:
- EP-A2- 0 789 314
- WO-A-90/08367
- WO-A-93/09532
- DE-A-102004 049 999

## Beschreibung

Die Erfindung betrifft ein Sicherheitselement zur Absicherung von Wertdokumenten, das magnetisches Material aufweist. Ferner betrifft die Erfindung ein Wertdokument sowie ein Folienmaterial mit dem Sicherheitselement und eine Messanordnung mit einem Magnetsensor und einem Wertdokument mit dem Sicherheitselement.

Bei einem Wertdokument im Sinne der Erfindung kann es sich um Banknoten, Ausweisdokumente, Scheckkarten, Kreditkarten handeln, aber auch um Aktien, Urkunden, Briefmarken, Schecks, Eintrittskarten, Fahrkarten, Flugscheine, Ausweise, Visasticker und Ähnliches sowie Etiketten, Siegel, Verpackungen oder andere Elemente. Die vereinfachende Benennung Wertdokument schließt deshalb im Folgenden stets Dokumente der genannten Art ein.

Aus dem Stand der Technik ist es bekannt, Wertdokumente mit Sicherheitselementen, etwa Sicherheitsstreifen oder auch Sicherheitsfäden, auszustatten, die magnetisches Material enthalten. Das magnetische Material kann dabei entweder durchgehend oder nur bereichsweise, zum Beispiel in Form einer Kodierung auf das Sicherheitselement aufgebracht sein. Zur magnetischen Kodierung eines Sicherheitsfadens dient beispielsweise eine bestimmte Abfolge von magnetischen und nichtmagnetischen Bereichen, die charakteristisch für Art des zu sichernden Wertdokuments ist. Außerdem ist es bekannt, verschiedene magnetische Materialien für eine Kodierung zu verwenden, beispielsweise mit unterschiedlicher Koerzitivfeldstärke.

Bei den bisher bekannten magnetischen Kodierungen werden beispielsweise zwei verschieden koerzitive magnetische Materialien eingesetzt, aus welchen zwei Sorten von Magnetbits gebildet werden. Entlang der magnetischen Kodierung sind die verschieden koerzitiven Magnetbits voneinander beabstandet, z.B. durch nichtmagnetisches Material voneinander getrennt.

Aus der WO90/08367 A ist ein magnetischer Sicherheitsfaden bekannt, der eine magnetische Kodierung aus einer Abfolge von magnetischen und nichtmagnetischen Bereichen aufweist. Die Magnetbereiche dieser Magnetkodierung bestehen alle aus demselben Magnetmaterial und haben dieselbe Koerzitivfeldstärke. Zwischen manchen Magnetbereichen gibt es Lückenbereiche, manche grenzen direkt aneinander.

Aus der DE102004049999 A ist ein magnetischer Sicherheitsfaden bekannt, auf dem durchgehend abwechselnd Magnetbereiche mit zwei unterschiedlichen Koerzitivfeldstärken angeordnet sind. Die Magnetbereiche dieses Sicherheitselements sollen nicht durch Lückenbereiche unterbrochen sein, damit ein Magnetdetektor nur zu Beginn und am Ende des Sicherheitselements ein Magnetsignal detektiert.

Zur maschinellen Prüfung von Sicherheitselementen, die entlang ihrer Längsrichtung eine magnetische Kodierung aufweisen, ist es erforderlich, dass die magnetische Kodierung bei verschiedenen Transportrichtungen des Sicherheitselements relativ zum Magnetsensor detektiert werden kann. Dies soll insbesondere bei einem Transport des Sicherheitselements parallel zur Richtung der magnetischen Kodierung gewährleistet sein. In dieser Messgeometrie ist es bei den bisher bekannten magnetischen Kodierungen messtechnisch schwierig, die verschieden koerzitiven Magnetbereiche getrennt voneinander zu detektieren. Durch die Beabstandung der benachbarten Magnetbits kommen weitere Magnetisierungsstufen und damit weitere Magnetsignale hinzu, die sich stark überlagern können. Problematisch ist dies ist besonders bei konventionellen Magnetsensoren, die nicht zur Unterscheidung der verschieden koerzitiven Magnetbereiche geeignet sind.

Der Erfindung liegt daher die Aufgabe zugrunde, eine magnetische Kodierung mit verschieden koerzitiven Magnetmaterialien für ein Sicherheitselement anzugeben, bei der die magnetische Kodierung auch in der Messgeometrie, wenn das Sicherheitselement entlang der magnetischen Kodierung transportiert wird, zuverlässig gemessen werden kann.

Des Weiteren ist es eine Aufgabe der Erfindung, ein Sicherheitselement, ein Wertdokument mit dem Sicherheitselement sowie eine Messanordnung und ein Verfahren zur Prüfung des Wertdokuments bereitzustellen.

Diese Aufgabe wird durch die Merkmale der unabhängigen Ansprüche gelöst. Weiterbildungen sind Gegenstand der Unteransprüche.

Das erfindungsgemäße Sicherheitselement enthält zum Beispiel zumindest einen Ausschnitt aus einer magnetischen Kodierung, die zumindest ein erstes Kodierungselement und zumindest ein zweites Kodierungselement aufweist. Das erste und zweite Kodierungselement sind entlang einer vorgegebenen Richtung auf bzw. in dem Sicherheitselement angeordnet. Das erste Kodierungselement weist entlang der vorgegebenen Richtung durchgehend einen ersten Magnetbereich mit einer ersten Koerzitivfeldstärke auf, das zweite Kodierungselement enthält einen ersten Lückenbereich und einen zweiten Magnetbereich mit einer zweiten Koerzitivfeldstärke, die sich von der ersten Koerzitivfeldstärke unterscheidet. Der erste Magnetbereich ist entlang der vorgegebenen Richtung unmittelbar benachbart zu dem zweiten Magnetbereich angeordnet. Außerdem sind die Längen des ersten und zweiten Magnetbereichs so gewählt, dass die Summe der Längen des ersten und zweiten Magnetbereichs entlang der vorgegebenen Richtung maximal 8 mm beträgt.

Die Kodierungselemente sind entlang einer vorgegebenen Richtung im Wesentlichen in einer Linie angeordnet. Der erste Magnetbereich enthält entlang der vorgegebenen Richtung durchgehend ein erstes magnetisches Material und der zweite Magnetbereich enthält entlang der vorgegebenen Richtung durchgehend ein zweites magnetisches Material. Die Angabe durchgehend ist im Sinne dieser Anmeldung als durchgehend entlang einer gedachten, geraden Linie zu verstehen. Bei Magnetsensoren mit geringer Auflösung liefert ein Magnetbereich mit Unterbrechungen, die viel kürzer sind als die Auflösung des verwendeten Magnetsensors, im Wesentlichen das gleiche Magnetsignal wie ein durchgehender Magnetbereich. Als durchgehend kann daher auch ein Magnetbereich mit sehr kurzen Unterbrechungen gelten, die viel kürzer sind als die Auflösung des Magnetsensors. Bei den verwendeten Magnetsensoren können diese Unterbrechungen z.B. eine Länge von bis zu 0,5 mm, vorzugsweise bis zu 0,3 mm aufweisen. Im Unterschied zu den Unterbrechungen weisen die ersten und zweiten Magnetbereiche jeweils mindestens eine Länge von 1 mm, vorzugsweise von mindestens 2 mm auf.

Der oder die Magnet- und Lückenbereiche sind entlang einer vorgegebenen Richtung entlang des Sicherheitselements angeordnet. Diese verläuft bevorzugt parallel zu einer Längsrichtung des Sicherheitselements. Als Längsrichtung des Sicherheitselements wird dabei die Richtung bezeichnet, in der das Sicherheitselement seine größte Ausdehnung besitzt.

Vorzugsweise besteht das erste Kodierungselement entlang der vorgegebenen Richtung aus dem ersten Magnetbereich und das zweite Kodierungselement besteht entlang der vorgegebenen Richtung aus dem ersten Lückenbereich und dem zweiten Magnetbereich. Dabei kann das zweite Kodierungselement als zweites Kodierungselement erster Art ausgebildet sein, bei dem der zweite Magnetbereich entlang der vorgegebenen Richtung nach dem ersten Lückenbereich angeordnet ist. Das zweite Kodierungselement kann alternativ als zweites Kodierungselement zweiter Art ausgebildet sein, bei dem der zweite Magnetbereich entlang der vorgegebenen Richtung vor dem ersten Lückenbereich angeordnet ist. Der zweite Magnetbereich des zweiten Kodierungselements kann entlang der vorgegebenen Richtung beispielsweise eine Länge von 10% bis 70% der Länge des zweiten Kodierungselements besitzen, vorzugsweise eine Länge von 30% bis 70%, insbesondere von 40% bis 60%. In einer speziellen Ausgestaltung weist der erste Lückenbereich und/oder der zweite Magnetbereich entlang der vorgegebenen Richtung eine Länge von 1 mm bis 4 mm auf, vorzugsweise von 2 mm bis 3 mm.

Das Sicherheitselement weist vorzugsweise mehrere Paare aus einem ersten und einem zweiten Kodierungselement auf, wobei das erste und zweite Kodierungselement entlang der vorgegebenen Richtung unmittelbar zueinander benachbart sind. Bevorzugt enthält die magnetische Kodierung jedoch entlang der vorgegebenen Richtung keine unmittelbar zueinander benachbarten ersten Kodierungselemente und/oder entlang der vorgegebenen Richtung keine unmittelbar zueinander benachbarten zweiten Kodierungselemente.

In einigen Ausführungsformen weist die magnetische Kodierung außerdem zumindest ein drittes Kodierungselement auf, das zusammen mit dem ersten und zweiten Kodierungselement entlang der vorgegebenen Richtung angeordnet ist. Das dritte Kodierungselement besteht entlang der vorgegebenen Richtung durchgehend aus einem zweiten Lückenbereich. Bevorzugt sind maximal vier dritte Kodierungselemente der magnetischen Kodierung entlang der vorgegebenen Richtung unmittelbar zueinander benachbart. Das erste und/oder das dritte Kodierungselement können entlang der vorgegebenen Richtung eine Länge von 2 mm bis 8 mm aufweisen, vorzugsweise von 3 mm bis 6 mm, insbesondere von etwa 4 mm.

In einer bevorzugten Ausführungsform besteht die magnetische Kodierung aus zumindest einem der ersten Kodierungselemente und zumindest einem der zweiten Kodierungselemente und zumindest einem oder keinem der dritten Kodierungselemente.

Der erste und der zweite Magnetbereich, vorzugsweise alle unmittelbar zueinander benachbarten ersten und zweiten Magnetbereiche, sind entlang der vorgegebenen Richtung beidseitig durch Lückenbereiche begrenzt, insbesondere durch einen ersten und einen zweiten Lückenbereich oder durch zwei zweite Lückenbereiche.

Bevorzugt besteht die magnetische Kodierung aus einer sich periodisch wiederholenden Anordnung der ersten, zweiten und gegebenenfalls der dritten Kodierungselemente. Bei der sich periodisch wiederholenden Anordnung sind die Kodierungselemente entlang der vorgegebenen Richtung in einer vorgegebenen Reihenfolge angeordnet. Vorzugsweise weist die sich periodisch wiederholende Anordnung zumindest zwei der ersten und zwei der zweiten Kodierungselemente auf, insbesondere zumindest zwei Paare aus einem ersten und einem zweiten Kodierungselement, wobei das erste und zweite Kodierungselement entlang der vorgegebenen Richtung unmittelbar zueinander benachbart sind. Die sich periodisch wiederholende Anordnung kann aus 6 bis 18 der Kodierungselemente bestehen, vorzugsweise aus 8 bis 16 der Kodierungselemente, insbesondere aus 10 bis 14 der Kodierungselemente.

Im Folgenden sind einige spezielle Ausgestaltungen der sich periodisch wiederholenden Anordnung aufgeführt, aus der sich die magnetische Kodierung des Sicherheitselements zusammensetzen kann. Dies wird lediglich beispielhaft anhand einer Auswahl von sich periodisch wiederholenden Anordnungen gezeigt, die sich aus 14 der Kodierungselemente zusammensetzten. Die sich periodisch wiederholende Anordnung besteht entlang der vorgegebenen Richtung zum Beispiel aus einer der folgenden, mit a) bis x) bezeichneten Perioden der Kodierungselemente, wobei A das erste Kodierungselement und B das zweite Kodierungselement erster Art und L das dritte Kodierungselement symbolisiert. Entsprechende Reihenfolge lassen sich auch für beliebige andere Anzahlen an Kodierungselementen finden:
a) LLLBALLLBALLBA
b) LLLBALLLBABABA
c) LLLBALLBALBABA
d) LLLBALLBABALBA
e) LLLBALBALLBABA
f) LLLBALBALBALBA
g) LLLBABALLLBABA
h) LLBALLBALLBABA
i) LLBALLBALBALBA
j) LLBALBALLBALBA
k) LLLBALBABABABA
l) LLLBABALBABABA
m) LLBALLBABABABA
n) LLBALBALBABABA
o) LLBALBABALBABA
p) LLBALBABABALBA
q) LLBABALLBABABA
r) LLBABALBALBABA
s) LBALBALBALBABA
t) LLBABABABABABA
u) LBALBABABABABA
v) LBABALBABABABA
w) LBABABALBABABA
x) BABABABABABABA

Aus den Perioden gehen beispielsweise durch zyklische Rotation einzelner der Kodierungselemente weitere Perioden hervor, aus denen ebenfalls eine magnetische Kodierung zusammengesetzt werden kann. Die zyklische Rotation erfolgt z.B. durch schrittweise Verlagerung einzelner der Kodierungselemente vom linken zum rechten Ende der angeführten Perioden. Eine zyklische Rotation besteht in einer schrittweisen Verlagerung einzelner Kodierungselemente vom Anfang einer Periode zum Ende der jeweiligen Periode. Im angeführten Beispiel der Periode a) bedeutet eine einzelne zyklische Rotation eine Verlagerung des linken Lückenelements L an das Ende der Periode a), womit sich die Periode LLBALLLBALLBAL ergibt. Zwei zyklische Rotationen führen entsprechend zur Periode LBALLLBALLBALL, usw.

Die magnetischen Kodierungen ergeben sich durch eine vielfache Wiederholung der jeweiligen Perioden und besitzen keinen bestimmten Anfang und kein bestimmtes Ende. Die magnetischen Kodierungen sind also nicht durch ihren Anfang und ihr Ende, sondern durch die jeweilige Reihenfolge der Kodierungselemente definiert. Aufgrund der vielfachen Wiederholung der Perioden führen die zyklischen Rotationen einer Periode zwar zu einer anderen Periode. Aus der zyklisch rotierten Periode lässt sich jedoch keine neue magnetische Kodierung zusammensetzen. Zur Definition der magnetischen Kodierungen können also jeweils beliebige aufeinander folgende (in obigem Beispiel 14) Kodierungselemente der jeweiligen magnetischen Kodierung zu einer Periode zusammengefasst werden. Die jeweils angeführte Periode ist also nur eine von mehreren möglichen Perioden zur Beschreibung der jeweiligen magnetischen Kodierung.

Neben den oben aufgeführten magnetischen Kodierungen mit 14 Kodierungselementen pro Periode lassen sich magnetische Kodierungen in analoger Weise auch aus periodischen Anordnungen beliebiger anderer Anzahlen von Kodierungselementen pro Periode bilden. Als zweites Beispiel sei hier exemplarisch eine Auswahl von magnetischen Kodierungen gezeigt, die eine Periode aus 8 der Kodierungselemente A, B, L aufweisen. Die sich periodisch wiederholende Anordnung besteht dann beispielsweise aus folgenden Perioden entlang der vorgegebenen Richtung:
8a) LLLBALBA
8b) LLBALLBA
8c) LLBABABA
8d) LBALBABA
8e) BABABABA

Als drittes Beispiel wird eine Auswahl von magnetischen Kodierungen mit einer Periode aus 10 der Kodierungselemente A, B, L angeführt. Die sich periodisch wiederholende Anordnung besteht dann beispielsweise aus folgenden Perioden entlang der vorgegebenen Richtung:
10a) LLLBALLLBA
10b) LLLBALBABA
10c) LLBALLBABA
10d) LLBALBALBA
10e) LLBABABABA
10f) LBALBABABA
10g) LBABALBABA
10h) BABABABABA

Ausgehend von den magnetischen Kodierungen mit den oben angeführten Perioden kann das Sicherheitselement auch verschiedene Modifikationen der magnetischen Kodierungen besitzen. Dies kann z.B. eine Spiegelung der magnetischen Kodierung sein, die sich dadurch erreichen lässt, dass ausgehend von einer Periode erstens die Reihenfolge der Kodierungselemente zur vorgegebenen Reihenfolge umgekehrt wird und zweitens alle zweiten Kodierungselemente erster Art B durch zweite Kodierungselemente zweiter Art B' ersetzt werden. Aus dieser umgekehrten Periode lassen sich zu den magnetischen Kodierungen gespiegelte magnetische Kodierungen zusammensetzen, die an einer senkrecht zu der vorgegebenen Richtung verlaufenden Achse gespiegelt sind. Die sich periodisch wiederholende Anordnung kann also auch aus einer Periode bestehen, die zu einer der oben genannten Perioden gespiegelt ist, oder aus einem Ausschnitt aus einer oder mehreren dieser Perioden. Die sich periodisch wiederholende Anordnung kann auch durch Hinzufügen eines oder mehrere der ersten und/oder zweiten und/oder dritten Kodierungselemente zu einer oder zu mehreren dieser Perioden gebildet werden.

Eine weitere Modifikation der magnetischen Kodierungen besteht darin, eines oder mehrere der ersten Kodierungselemente A durch eine äquivalente Anzahl an dritten Kodierungselementen L zu ersetzen. Alternativ oder zusätzlich kann auch eines oder mehrere der zweiten Kodierungselemente B durch eine äquivalente Anzahl an dritten Kodierungselementen L ersetzt werden. Die angeführten Modifikationen können auch miteinander und/oder mit zyklischen Rotationen kombiniert werden und gelten nicht nur für die explizit angeführten magnetischen Kodierungen sondern entsprechend auch für alle anderen erfindungsgemäßen magnetischen Kodierungen, beispielsweise mit anderer Anzahl an Kodierungselementen pro Periode.

Die angeführten Perioden können aus ersten, zweiten und dritten Kodierungselementen derselben Länge aufgebaut sein. Die Längen der ersten und/oder der zweiten und/oder der dritten Kodierungselemente können jedoch auch unterschiedlich sein. Außerdem kann die Periode auch verschiedene erste Kodierungselemente und/oder verschiedene zweite Kodierungselemente und/oder verschiedene dritte Kodierungselemente aufweisen, beispielsweise mit unterschiedlichen Längen.

Im Allgemeinen enthält das erfindungsgemäße Sicherheitselement zumindest eine charakteristische magnetische Struktur, die im Folgenden beschrieben wird. Diese kann, muss jedoch nicht zum Zweck einer magnetischen Kodierung des Sicherheitselements vorgesehen sein:
Das Sicherheitselement enthält zumindest zwei Lückenbereiche und zumindest einen magnetischen Teilbereich, die entlang einer vorgegebenen Richtung angeordnet sind. Der magnetische Teilbereich weist einen ersten Magnetbereich mit einer ersten Koerzitivfeldstärke auf und einen zweiten Magnetbereich mit einer zweiten Koerzitivfeldstärke, wobei sich die erste und zweite Koerzitivfeldstärke um mindestens einen Faktor 5 unterscheiden. Der erste und der zweite Magnetbereich sind entlang der vorgegebenen Richtung unmittelbar zueinander benachbart. Der magnetische Teilbereich und die zumindest zwei Lückenbereiche können Teile einer magnetischen Kodierung sein, insbesondere Teile einer sich periodisch wiederholenden Anordnung einer magnetischen Kodierung. Der magnetische Teilbereich besteht beispielsweise aus dem ersten und dem zweiten Magnetbereich. Bevorzugt beträgt die Summe der Längen des ersten und des zweiten Magnetbereichs entlang der vorgegebenen Richtung maximal 8 mm. Des Weiteren kann das Sicherheitselement entlang der vorgegebenen Richtung mehrere voneinander beabstandete magnetische Teilbereiche aufweisen. Zwischen diesen sind insbesondere jeweils ein oder mehrere Lückenbereiche angeordnet. Entlang der vorgegebenen Richtung ist einer der zumindest zwei Lückenbereiche vor dem magnetischen Teilbereich und einer der zumindest zwei Lückenbereiche nach dem magnetischen Teilbereich angeordnet. Die zumindest zwei Lückenbereiche sind insbesondere zwei der ersten Lückenbereiche oder der erste und zweite Lückenbereich.

Die ersten und zweiten Magnetbereiche sind entlang der vorgegebenen Richtung im Wesentlichen nebeneinander angeordnet. Bei Draufsicht auf die Ebene des Sicherheitselements liegen sie daher nebeneinander. Insbesondere sind die ersten und zweiten Magnetbereiche nicht übereinander angeordnet. Außerdem sind die ersten und zweiten Magnetbereiche bevorzugt in einer Ebene angeordnet, können aber herstellungsbedingt auch etwas in Richtung senkrecht zur Ebene des Sicherheitselements versetzt angeordnet sein. Bevorzugt grenzen die Ränder der unmittelbar zueinander benachbarten ersten und zweiten Magnetbereiche möglichst genau aneinander, d.h. mit minimalem Überlapp oder Abstand voneinander. Allerdings lässt sich bei einem zweistufigen Druckverfahren der verschiedenen koerzitiven Magnetmaterialien nicht vermeiden, dass die Ränder der verschieden koerzitiven Magnetbereiche, die nominell zwar genau nebeneinander gedruckt werden, tatsächlich nicht ganz exakt aufeinander treffen. Die ersten und zweiten Magnetbereiche können herstellungstechnisch nur insofern unmittelbar zueinander benachbart platziert werden, soweit es sich im Rahmen der Drucktoleranz realisieren lässt. Die unmittelbar zueinander benachbarten ersten und zweiten Magnetbereiche können daher auch geringfügig überlappen oder einen geringfügigen Abstand voneinander aufweisen. Im Sinne der Anmeldung sind Abstände und Überlapps der ersten und zweiten Magnetbereiche, die im Rahmen der Drucktoleranz liegen, noch als unmittelbar zueinander benachbart zu betrachten. Je nach Justiergenauigkeit der beiden Druckschritte für die verschieden koerzitiven Magnetmaterialien liegen im Rahmen der Drucktoleranz beispielsweise Abstände und Überlapps von bis zu 1 mm entlang der vorgegebenen Richtung, insbesondere von bis zu 0,5 mm, beispielsweise von bis zu 0,3 mm.

Das Sicherheitselement weist außerdem mehrere weitere Magnetbereiche auf, die die erste Koerzitivfeldstärke aufweisen, wobei diese insbesondere aus dem gleichen magnetischen Material wie der erste Magnetbereich bestehen. Zusätzlich weist das Sicherheitselement einen oder mehrere weitere Magnetbereiche auf, die die zweite Koerzitivfeldstärke aufweisen, wobei diese insbesondere aus dem gleichen magnetischen Material wie der zweite Magnetbereich bestehen. Der oder die weiteren Magnetbereiche sind beidseitig von ersten und/oder zweiten Lückenbereichen begrenzt. Die weiteren Magnetbereiche entstehen beispielsweise durch die oben genannte Modifikation der jeweiligen Perioden, bei der mehrere erste Kodierungselemente A durch eine entsprechende Anzahl an dritten Kodierungselementen L ersetzt werden oder auch mehrere der zweiten Kodierungselemente B durch eine entsprechende Anzahl an dritten Kodierungselementen L ersetzt werden.

In einer besonders bevorzugten Ausführungsform wird die Summe der Längen des ersten und zweiten Magnetbereichs entlang der vorgegebenen Richtung so gewählt, dass sich eine konstruktive Interferenz der Magnetsignale ergibt. Insbesondere können die Magnetsignale konstruktiv miteinander interferieren, die zu Beginn und zum Ende eines Paars aus erstem und zweitem Magnetbereich von einem Magnetsensor erfasst werden, wenn das Sicherheitselement parallel oder entgegengesetzt zur vorgegebenen Richtung, an dem Magnetsensor vorbeitransportiert wird. Mit Hilfe der konstruktiven Interferenz der Magnetsignale ergibt sich am Magnetsensor ein Messsignal mit einer größeren Maximalamplitude als sie die einzelnen Magnetsignale selbst aufweisen. Vorteilhaft kann dies im Fall relativ geringer Signalamplituden eingesetzt werden, wie sie beispielsweise bei den Magnetsignalen von Sicherheitsfäden im Banknoten-Quertransport auftreten.

Die unmittelbar zueinander benachbarten ersten und zweiten Magnetbereiche sind entlang der vorgegebenen Richtung durch zwei Magnetisierungsstufen begrenzt. Als Magnetisierungsstufe wird eine stufenartige Änderung der remanenten Flussdichte bezeichnet, die sich am Übergang zwischen einem Magnetbereich und einem Lückenbereich ergibt. Die stufenartige Änderung der remanenten Flussdichte kann durch eine stufenartige Änderung der Konzentration und/oder der Schichtdicke und/oder der Breite des magnetischen Materials realisiert sein. Mit der bevorzugten Länge des ersten und zweiten Magnetbereiches ist der Abstand der beiden Magnetisierungsstufen entlang der vorgegebenen Richtung so groß gewählt, dass die Magnetsignale der beiden Magnetisierungsstufen konstruktiv miteinander interferieren.

Bei bevorzugten Ausführungsformen beträgt die Summe der Längen des ersten und zweiten Magnetbereichs entlang der vorgegebenen Richtung maximal 7 mm, bevorzugt maximal 6 mm, besonders bevorzugt maximal 5 mm, insbesondere maximal 4 mm. Dies kann für einen oder auch für alle der unmittelbar benachbarten ersten und zweiten Magnetbereiche gelten.

Die erste und zweite Koerzitivfeldstärke unterscheiden sich um mindestens einen Faktor 5. Die erste Koerzitivfeldstärke ist beispielsweise geringer als die zweite Koerzitivfeldstärke, sie kann aber auch höher sein. In einer speziellen Ausführungsform weisen der erste und zweite Magnetbereich etwa die gleiche remanente Flussdichte auf. Diese können aber auch bis zu 10% voneinander abweichen. Das magnetische Material der Magnetbereiche sind z.B. Magnetpigmente. Das magnetische Material kann hartmagnetisches Material aufweisen, bevorzugt eine oder mehrere verschiedene Eisenverbindungen, besonders bevorzugt ein oder mehrere verschiedene Eisenoxide oder Magnetit.

Die ersten und zweiten Magnetbereiche und/oder die ersten und zweiten Lückenbereiche erstrecken sich in einer Ausführungsform über die gesamte Breite des Sicherheitselements. Die Breite des Sicherheitselements ist die Ausdehnung senkrecht zu der vorgegebenen Richtung, beispielsweise senkrecht zur Längsrichtung des Sicherheitselements. In einer weiteren Ausführungsform sind die ersten und zweiten Magnetbereiche in einem oder in beiden Randbereichen des Sicherheitselements angeordnet. Die ersten und zweiten Magnetbereiche können eine oder zwei parallel zu der vorgegebenen Richtung in bzw. auf dem Sicherheitselement angeordnete Randspuren bilden. Die zwei Randspuren weisen vorzugsweise dieselbe magnetische Kodierung auf, insbesondere den gleichen Ausschnitt aus einer der magnetischen Kodierungen. In bzw. auf den außerhalb der Magnetbereiche angeordneten Bereichen des Sicherheitselements lassen sich Kennzeichnungselemente wie zum Beispiel Zeichen, Symbole, Text oder auch Muster einbringen. Durch diese Kennzeichnungselemente kann das Sicherheitselement individuell, d.h. entsprechend seinem Einsatzbereich, z.B. je nach Art des zu sichernden Wertdokuments, gekennzeichnet werden. Die Kennzeichnungselemente können außerhalb der Randspuren, zum Beispiel zwischen den beiden Randspuren auf bzw. in dem Sicherheitselement angeordnet sein.

Die Lückenbereiche weisen entlang der vorgegebenen Richtung durchgehend eine geringere remanente Flussdichte auf als der erste und zweite Magnetbereich. Beispielsweise enthalten die Lückenbereiche entlang der vorgegebenen Richtung durchgehend kein magnetisches Material. Zur Realisierung einer durchgehend geringeren remanenten Flussdichte in den Lückenbereichen weisen die Lückenbereiche beispielsweise eine geringere Konzentration des magnetischen Materials auf als die Magnetbereiche. Alternativ oder zusätzlich ist es auch möglich, dass in den Lückenbereichen eine geringere Schichtdicke oder auch eine geringere Breite des magnetischen Materials oder auch ein anderes magnetisches Material aufgebracht ist als in den Magnetbereichen. Vorzugsweise beträgt die remanente Flussdichte und/oder die Konzentration und/oder die Schichtdicke und/oder die Breite des magnetischen Materials der Lückenbereiche weniger als 50%, bevorzugt weniger als 10%, der remanenten Flussdichte und/oder der Konzentration und/oder der Schichtdicke und/oder der Breite des magnetischen Materials der Magnetbereiche.

Das Sicherheitselement, beispielsweise ein Sicherheitsfaden oder eine Planchette oder ein Etikett, kann direkt auf einem Wertdokument oder auf einem Sicherheitspapier erzeugt werden, es kann aber auch auf einem separaten Substrat vorbereitet werden. Falls es beispielsweise Schwierigkeiten bereiten würde, das Wertdokument direkt mit den magnetischen Materialien zu versehen, kann es sinnvoll sein, den Aufbau des Sicherheitselements zumindest teilweise auf dem separaten Substrat vorzubereiten. Das separate Substrat, auf dem das Sicherheitselement aufgebracht sein kann, weist bevorzugt Kunststoff auf und kann beispielsweise ein Folienmaterial, insbesondere ein Transfermaterial, sein oder aufweisen. Das Sicherheitselement, insbesondere die magnetischen Materialien des Sicherheitselements, können zum Beispiel in Endlosform auf einem Trägermaterial des Transfermaterials aufgebracht sein. Die Befestigung des Sicherheitselements auf ein zu sicherndes Wertdokument erfolgt dabei durch eine Klebstoffschicht, die auf das Wertdokument oder auch auf die oberste Schicht des Transfermaterials aufgebracht wird. Nach dem Übertrag wird das Trägermaterial des Transfermaterials abgezogen und lediglich das Sicherheitselement verbleibt auf dem zu sichernden Wertdokument.

Darüber hinaus kann das Sicherheitselement auch ein oder mehrere weitere Sicherheitsmerkmale aufweisen, insbesondere optisch variable Sicherheitsmerkmale. Diese weiteren Sicherheitsmerkmale können teilweise oder vollständig auf oder auch in dem Sicherheitselement angeordnet sein. Das Sicherheitselement kann insbesondere eines oder mehrere der folgenden optisch variablen Sicherheitsmerkmale aufweisen: Beugungsstrukturen, wie z.B. Hologramme, Mattstrukturen, optisch variable Beschichtungen, wie z.B. Interferenzschichten, optisch variable Farben, wie z.B. Farben mit Interferenzpigmenten oder Metalleffektfarben, oder auch Prägungen, auf deren Flanken Farben aufgedruckt sind.

Bei dem Wertdokument, das mit dem Sicherheitselement versehen wird, handelt es sich vorzugsweise um ein Sicherheitsdokument, beispielsweise eine Banknote, ein Ausweis, eine Chequekarte oder um Produktverpackungen. Auch andere Wertgegenstände, die eine sicherheitstechnische Absicherung benötigen, können selbstverständlich mit dem erfindungsgemäßen Sicherheitselement versehen werden.

Des Weiteren betrifft die Erfindung ein Verfahren zur Prüfung von Wertdokumenten mit einem oder mehreren Sicherheitselementen, bei dem Magnetsignale des Sicherheitselements gemessen werden. Mit Hilfe einer Messanordnung, die zumindest ein mit dem Sicherheitselement ausgestattetes Wertdokument und einen Magnetsensor aufweist, kann das erfindungsgemäße Verfahren durchgeführt werden.

Zur Messung der magnetischen Eigenschaften des Wertdokuments bzw. des Sicherheitselements wird das Wertdokument an dem Magnetsensor vorbeitransportiert. Die Transportrichtung der Wertdokumente kann dabei entweder parallel oder senkrecht zur Längsrichtung des Sicherheitselements verlaufen, das in bzw. auf dem Wertdokument angeordnet ist. Die Magnetsignale des Sicherheitselements werden mit Hilfe des Magnetsensors aufgenommen und einer Auswerteeinrichtung zugeführt.

Beispielsweise verläuft die Transportrichtung der Wertdokumente parallel zur Längsrichtung des Sicherheitselements. Bei dieser Prüfung des Sicherheitselements werden die Magnetsignale des Sicherheitselements in einer einzigen Messspur des Magnetsensors zeitlich nacheinander detektiert. Bevorzugt sind die Magnetbereiche entlang des Sicherheitselements so angeordnet, dass zumindest die Magnetsignale eines ersten und zweiten Magnetbereichs, insbesondere der zwei Magnetisierungsstufen, die einen ersten und zweiten Magnetbereich begrenzen, konstruktiv miteinander interferieren. Die konstruktive Interferenz der Magnetsignale lässt sich zum Beispiel mit induktiv oder auch mit magnetoresistiv funktionierenden Magnetsensoren erreichen.

Insbesondere ist die Maximalamplitude zumindest eines Magnetsignals, das sich durch Vorbeitransportieren des Sicherheitselements an dem Magnetsensor ergibt, durch konstruktive Interferenz erhöht, insbesondere im Vergleich zu einer Maximalamplitude eines Referenz-Magnetsignals. Das Referenz-Magnetsignals ist das Magnetsignal einer einzelnen Magnetisierungsstufe eines Referenz-Magnetbereichs, der etwa die gleiche Magnetisierung aufweist wie der erste und zweite Magnetbereich, wobei das Referenz-Magnetsignal an dem Magnetsensor unter denselben Messbedingungen erfasst wird wie das Magnetsignal der ersten und zweiten Magnetbereiche. Zur Beurteilung, ob die Maximalamplitude des Magnetsignals der unmittelbar zueinander benachbarten ersten und zweiten Magnetbereichs durch konstruktive Interferenz erhöht ist, ist diese mit der Maximalamplitude eines Referenz-Magnetsignals zu vergleichen. Für diesen Vergleich kann z.B. der Referenz-Magnetbereich etwa mit der gleichen Magnetisierung versehen werden wie der erste und der zweite Magnetbereich. Falls die Magnetisierungen des ersten und zweiten Magnetbereichs unterschiedlich sind, wird der Referenzbereich für den Vergleich auf etwa die größere der beiden Magnetisierungen des ersten und zweiten Magnetbereichs magnetisiert. Die unmittelbar zueinander benachbarten ersten und zweiten Magnetbereich und der Referenz-Magnetbereich werden unter den gleichen Messbedingungen gemessen und deren Magnetsignale miteinander verglichen.

Weitere Vorteile und Ausführungsformen der Erfindung werden anhand der Figuren näher erläutert. Die Erfindung wird aus Gründen der Übersichtlichkeit nur am Beispiel einer Banknote näher erläutert. Es ist aber offensichtlich, dass die Erfindung ohne weiteres für die oben erwähnten Wertdokumente verwendet werden kann.

Es zeigen:
- Figur 1: eine schematische Anordnung aus einem Magnetsensor und einer an dem Magnetsensor vorbeitransportierten Banknote mit einem Sicherheitselement,
- Figur 2a: ein charakteristischer Abschnitt eines Sicherheitselements mit einem magnetischen Teilbereich, der aus zwei Magnetbereichen mit unterschiedlicher Koerzitivfeldstärke besteht,
- Figur 2b-c: beispielhafte Ausführungsformen des ersten Kodierungselements A, des zweiten Kodierungselements erster Art B und zweiter Art B' und des dritten Kodierungselements L,
- Figur 3a: eine Ausführungsbeispiel eines Sicherheitselements (Ausschnitt I bis II) mit einer beispielhaft herausgegriffenen magnetischen Kodierung (1, vgl. Figur 4), bei der die Kodierungselemente (A1, B1, L1) parallel in zwei Randspuren des Sicherheitselements angeordnet sind,
- Figur 3b: schematische Darstellung einer Banknote mit dem Sicherheitselement, das den Ausschnitt I...II der magnetischen Kodierung (1) aus Figur 3a aufweist,
- Figur 4: schematische Darstellung jeweils zweier Perioden P einer Auswahl von magnetischen Kodierungen mit 14 Kodierungselementen,
- Figur 5a-d: Messanordnung und Magnetsignal So einer Magnetisierungsstufe eines Magnetbereichs Mo, sowie Messanordnungen und Magnetsignale S₁, S₂, S₃ und eines kurzen Magnetbereichs M₁, eines mittleren Magnetbereichs M₂, dessen Magnetsignal durch konstruktive Interferenz erhöht ist, und eines langen Magnetbereichs M₃,
- Figur 5e: zwei beispielhafte Ausschnitte von Sicherheitselementen mit magnetischen Teilbereichen, deren Magnetsignal eine durch konstruktive Interferenz erhöhte Maximalamplitude aufweist.

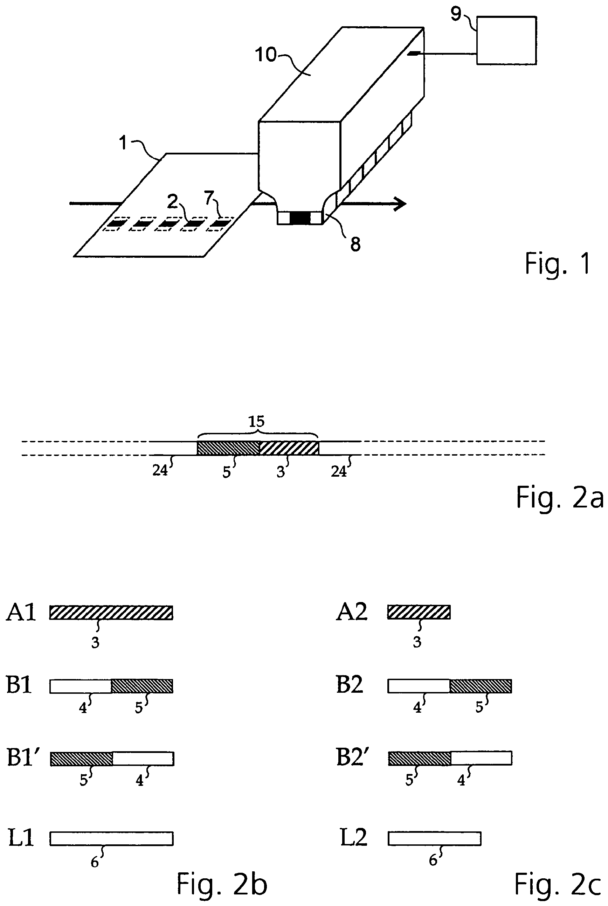

In Figur 1 ist schematisch ein Ausschnitt aus einer Vorrichtung zur Prüfung von Banknoten auf deren magnetische Eigenschaften gezeigt. Eine zu prüfende Banknote 1 mit einem Sicherheitselement 2 wird von einem nicht dargestellten Transportsystem entlang der mit dem Pfeil in Figur 1 gezeigten Transportrichtung durch die Vorrichtung transportiert. In dem gezeigten Beispiel wird eine Banknote 1 dabei im Quertransport an einem induktiv arbeitenden Magnetsensor 10 vorbeitransportiert. Dabei wird das Sicherheitselement 2, das mit seiner Längsrichtung entlang der Transportrichtung der Banknote 1 angeordnet ist, auf seine magnetischen Eigenschaften geprüft. Das Sicherheitselement 2 ist beispielsweise ein Sicherheitsfaden, der teilweise in das Banknotensubstrat eingebettet ist und nur an Fenstern 7 an dessen Oberfläche tritt bzw. an dessen Oberfläche sichtbar ist.

Der Magnetsensor 10 besitzt mehrere Messspuren 8, die entlang einer Linie senkrecht zur Transportrichtung der Banknoten angeordnet sind. An dem induktiv arbeitenden Magnetsensor 10 werden als Magnetsignale jeweils zeitliche Änderungen der magnetischen Eigenschaften im Erfassungsbereich der einzelnen Messspuren 8 des Magnetsensors erkannt. Beim Vorbeitransportieren eines Sicherheitselements 2, das durchgehend mit magnetischem Material versehen ist und dessen magnetische Eigenschaften entlang des Sicherheitselements konstant sind, würden die jeweiligen Messspuren 8 lediglich am Anfang und Ende des Sicherheitselements 2 Magnetsignale detektieren. Wird dagegen ein Sicherheitselement 2 vorbeitransportiert, das nur stellenweise magnetisches Material aufweist - beispielsweise innerhalb von Magnetbereichen, die durch Lückenbereiche voneinander getrennt sind - so ergeben sich zusätzliche Magnetsignale an jeder Magnetisierungsstufe, d.h. an den Grenzen zwischen Magnetbereichen und Lückenbereichen. Die Magnetsignale werden von dem Magnetsensor 10 zu einer Auswerteeinrichtung 9 übertragen, die die Echtheit und/oder die Währung und/oder die Emission und/oder die Denomination der Banknote 1 überprüft.

In Figur 2a ist ein Abschnitt eines Sicherheitselements 2 dargestellt, der einen magnetischen Teilbereich 15 enthält. Der magnetische Teilbereich 15 besteht aus einem ersten Magnetbereich 3 einer ersten Koerzitivfeldstärke und aus einem zweiten Magnetbereich 5 einer zweiten Koerzitivfeldstärke, die z.B. höher ist als die erste. An beiden Seiten wird der magnetische Teilbereich 15 von Lückenbereichen 24 begrenzt, die kein magnetisches Material enthalten. Das Sicherheitselement 2 kann neben dem gezeigten magnetischen Teilbereich 15 zum Beispiel weitere derartige magnetische Teilbereiche 15 enthalten oder auch einzelne erste Magnetbereiche 3 oder auch einzelne zweite Magnetbereiche 5, die jeweils beidseitig von Lückenbereichen begrenzt sind.

Figur 2b zeigt ein Ausführungsbeispiel von drei verschiedenen Kodierungselementen A1, B1 und L1. Diese bilden ein konkretes Beispiel für die (allgemein formulierten) ersten, zweiten und dritte Kodierungselemente A, B, L. Aus mehreren dieser Kodierungselemente A1, B1, L1 lässt sich eine magnetische Kodierung des Sicherheitselements 2 zusammensetzen. Das erste Kodierungselement A1 weist entlang einer vorgegebenen Richtung, die in Figur 2a z.B. von links nach rechts verläuft, durchgehend einen ersten Magnetbereich 3 auf. Das zweite Kodierungselement B1 besteht in diesem Beispiel entlang der vorgegebenen Richtung aus einem ersten Lückenbereich 4 und einem zweiten Magnetbereich 5, deren Längen etwa gleich sind. Der zweite Magnetbereich 5 hat in diesem Beispiel mit 3000 Oe bis 4200 Oe, entsprechend 239 kA/m bis 334 kA/m, eine wesentlich höhere Koerzitivfeldstärke als der erste Magnetbereich 3 mit 200 Oe bis 320 Oe, entsprechend 15,9 kA/m bis 25,5 kA/m. Die remanente Flussdichte der beiden Magnetbereiche 3 und 5 ist etwa gleich groß. Das dritte Kodierungselement L1, das optional in den verschiedenen magnetischen Kodierungen enthalten sein kann, besteht entlang der vorgegebenen Richtung durchgehend aus einem zweiten Lückenbereich 6. Die Lückenbereiche 4, 6 weisen entweder kein magnetisches Material auf oder eine wesentlich geringere remanente Flussdichte als die Magnetbereiche 3, 5. Dies kann z. B. durch eine entsprechende Wahl der Schichtdicken und/oder der Konzentrationen und/oder der Breite der magnetischen Materialien, z.B. der magnetischen Pigmente, erreicht werden.

In Figur 2c ist mit A2, B2, L2 ein weiteres Ausführungsbeispiel der drei Kodierungselemente A, B, L dargestellt, bei denen die Längen der Kodierungselemente unterschiedlich sind. Die magnetische Kodierung des Sicherheitselements 2 kann auch aus mehreren der Kodierungselemente A2, B2, L2 gebildet werden oder auch durch andere Ausführungsformen der Kodierungselemente, z.B. mit anderen Längenverhältnissen. An Stelle des zweiten Kodierungselements erster Art B1 bzw. B2 kann auch das zweite Kodierungselement zweiter Art B1' bzw. B2' verwendet werden, wobei sich die Perioden dann aus den Kodierungselementen A1, B1', L1 bzw. A2, B2', L2 zusammensetzen. Damit lassen sich die oben genannten gespiegelten magnetische Kodierungen bilden, die B' enthalten.

Die magnetischen Kodierungen können durch verschiedene Ausführungsformen des ersten, zweiten und dritten Kodierungselements gebildet werden, so z.B. mit den ersten Kodierungselementen A1, A2, mit den zweiten Kodierungselementen B1, B1', B2, B2' und mit den dritten Kodierungselementen L1, L2, vgl. Figuren 2b, 2c. Durch Einsetzen konkreter Ausführungsformen der Kodierungselemente, z.B. A1, B1, L1 oder auch A2, B2, L2, für die (allgemein formulierten) Kodierungselemente A, B, L ergeben sich konkrete Ausführungsformen der Perioden, so z.B. der oben angeführten Perioden a)-x) aus 14 Kodierungselementen. Das erste Kodierungselement A kann beispielsweise durch A1 gebildet sein, das zweite Kodierungselement B durch B1 und das dritte Kodierungselement L durch L1. In gleicher Weise können die ersten, zweiten und dritten Kodierungselemente A, B, L auch durch weitere Ausführungsformen von Kodierungselementen gebildet werden, beispielsweise mit Kodierungselementen, die andere Längenverhältnisse aufweisen und/oder deren Magnet- und Lückenbereiche andere Längenverhältnisse besitzen als die gezeigten Ausführungsformen.

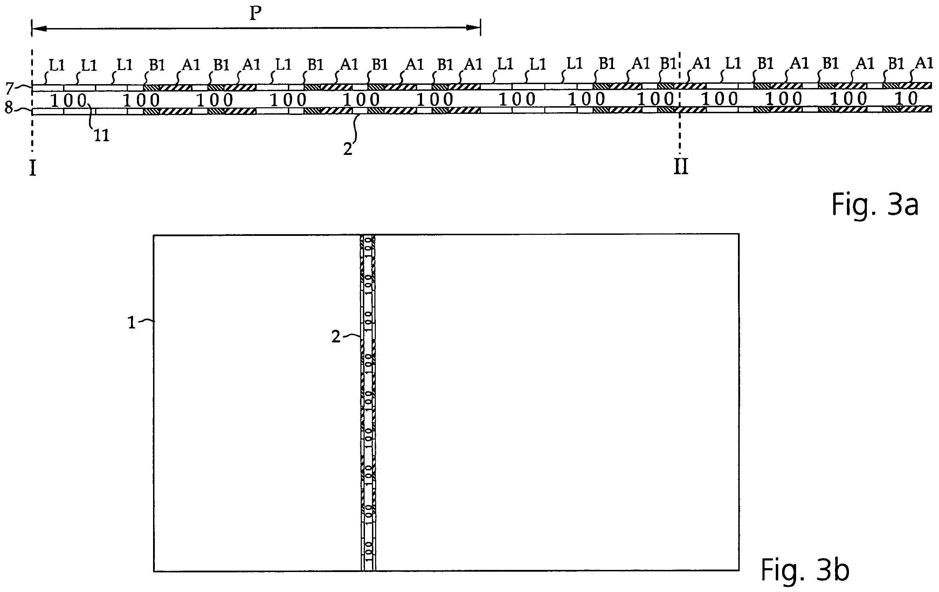

Figur 3a zeigt ein spezielles Ausführungsbeispiel eines Sicherheitsfadens 2 mit einer magnetischen Kodierung, von der in Figur 3a genau zwei Perioden P abgebildet sind, vgl. Periode 1). Das erfindungsgemäße Sicherheitselement 2 besteht beispielsweise aus dem Ausschnitt, der durch die Markierungen I und II begrenzt ist. Entlang einer vorgegebenen Richtung, z.B. von links nach rechts in Figur 3a, sind die Kodierungselemente A1, B1 und L1 in einer bestimmten Reihenfolge auf dem Sicherheitselement 2 angeordnet. Die Kodierungselemente A1, B1 und L1 sind in der gleichen Reihenfolge sowohl in einem oberen als auch in einem unteren Randbereich des Sicherheitselements 2 angeordnet und bilden eine obere 7 und eine untere Randspur 8 parallel zur Längsrichtung des Sicherheitselements 2. Zwischen den beiden Randspuren 7 und 8, die jeweils z.B. 0,1 bis 1,2 mm breit sind, kann das Sicherheitselement 2 zudem Kennzeichnungselemente 11, wie zum Beispiel Aussparungen in einer Metallschicht aufweisen, die Ziffern, Zeichen, Symbole oder Ähnliches bilden.

In Figur 3b ist eine Banknote 1 aus Papier oder auch Kunststoff dargestellt, die mit einem über die gesamte Breite der Banknote 1 verlaufenden Sicherheitsfaden 2 versehen ist, der vollständig oder teilweise in die Banknote 1 eingebettet sein kann. Der Sicherheitsfaden 2 enthält den mit I bis II markierten Ausschnitt der in Figur 3a gezeigten magnetischen Kodierung. Die Banknote 1 kann selbstverständlich weitere Sicherheitsmerkmale, wie Wasserzeichen, Stahltiefdruck, Sicherheitsfaden, lumineszierende Aufdrucke usw., aufweisen. Der auf der Banknote 1 angeordnete Sicherheitsfaden 2 kann aufgedruckt, aufgeklebt oder in die Banknote 1 eingebracht sein.

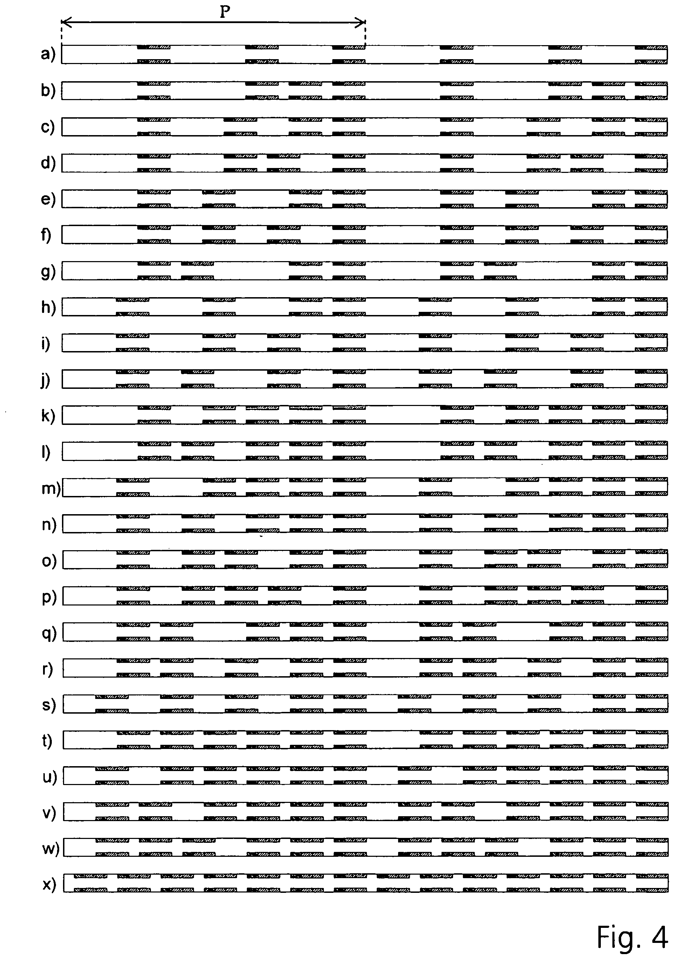

In Figur 4 sind schematisch Ausschnitte verschiedener magnetische Kodierungen dargestellt, die mit den Kodierungselementen A1, B1, L1 gebildet werden können. Von jeder der magnetischen Kodierungen ist in Figur 4 jeweils ein Ausschnitt von zwei Perioden P gezeigt. Die mit 1) bezeichnete Periode definiert die magnetische Kodierung aus den Figuren 3a, b. Jede Periode P enthält 14 der Kodierungselemente A1, B1, L1, die entlang der vorgegebenen Richtung jeweils in einer bestimmten Reihenfolge angeordnet sind. Die in Figur 4 gezeigten Perioden P setzen sich in folgender Weise aus den 14 Kodierungselementen zusammen:
a) L1L1L1B1A1L1L1L1B1A1L1L1B1A1
b) L1L1L1B1A1L1L1L1B1A1B1A1B1A1
c) L1L1L1B1A1L1L1B1A1L1B1A1B1A1
d) L1L1L1B1A1L1L1B1A1B1A1L1B1A1
e) L1L1L1B1A1L1B1A1L1L1B1A1B1A1
f) L1L1L1B1A1L1B1A1L1B1A1L1B1A1
g) L1L1L1B1A1B1A1L1L1L1B1A1B1A1
h) L1L1B1A1L1L1B1A1L1L1B1A1B1A1
i) L1L1B1A1L1L1B1A1L1B1A1L1B1A1
j) L1L1B1A1L1B1A1L1L1B1A1L1B1A1
k) L1L1L1B1A1L1B1A1B1A1B1A1B1A1
l) L1L1L1B1A1B1A1L1B1A1B1A1B1A1
m) L1L1B1A1L1L1B1A1B1A1B1A1B1A1
n) L1L1B1A1L1B1A1L1B1A1B1A1B1A1
o) L1L1B1A1L1B1A1B1A1L1B1A1B1A1
p) L1L1B1A1L1B1A1B1A1B1A1L1B1A1
q) L1L1B1A1B1A1L1L1B1A1B1A1B1A1
r) L1L1B1A1B1A1L1B1A1L1B1A1B1A1
s) L1B1A1L1B1A1L1B1A1L1B1A1B1A1
t) L1L1B1A1B1A1B1A1B1A1B1A1B1A1
u) L1B1A1L1B1A1B1A1B1A1B1A1B1A1
v) L1B1A1B1A1L1B1A1B1A1B1A1B1A1
w) L1B1A1B1A1B1A1L1B1A1B1A1B1A1
x) B1A1B1A1B1A1B1A1B1A1B1A1B1A1

Bei den in Figur 4 gezeigten Perioden handelt es sich um eine bevorzugte Auswahl solcher Perioden, die mehrere unmittelbar zueinander benachbarte erste Magnetbereiche 3 und zweite Magnetbereiche 5 enthalten. Diese unmittelbar zueinander benachbarten, verschieden koerzitiven Magnetbereiche 3, 5 sind beidseitig von ersten 4 und/oder zweiten Lückenbereichen 6 begrenzt. Für das Sicherheitselement 2 kann von den aus den Perioden P zusammengesetzten magnetischen Kodierungen jeweils ein beliebiger Ausschnitt verwendet werden, der jedoch zumindest eine Periode enthalten sollte, vgl. Figuren 3a, 3b. Die zumindest eine enthaltene Periode kann eine der angeführten Perioden P sein, es kann jedoch auch eine durch die oben genannten Modifikationen modifizierte, z.B. zyklisch rotierte Periode sein.

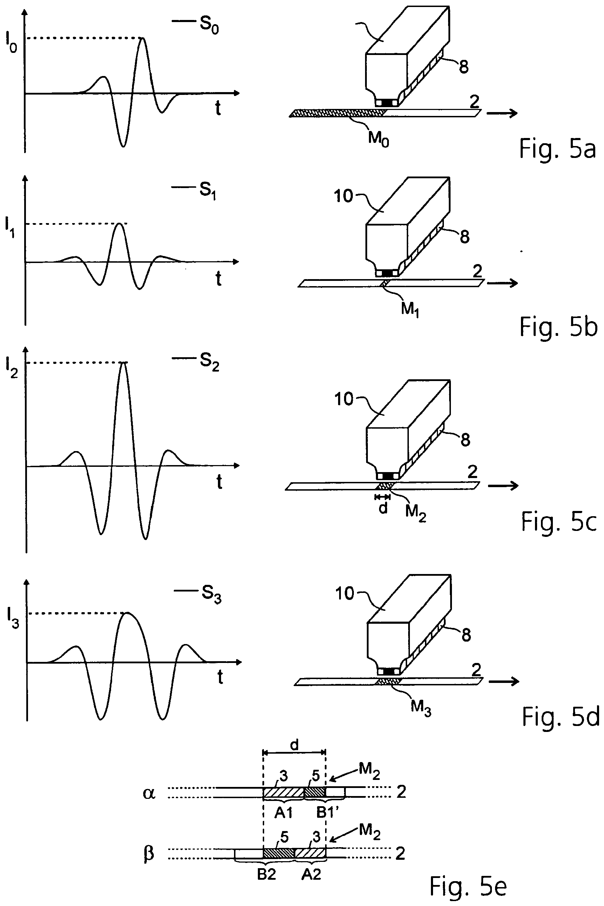

Figur 5a-d veranschaulicht verschiedene Magnetsignale, die sich beim Vorbeitransportieren verschiedener Sicherheitselemente entlang deren Längsrichtung an einer der Messspuren 8 des Magnetsensors 10 ergeben. Die Sicherheitselemente weisen verschieden lange Magnetbereiche M₀, M₁, M₂, M₃ auf, die aus dem gleichen magnetischen Material mit gleicher Konzentration etc. gebildet sind. Auch die Magnetisierung des magnetischen Materials ist für alle Magnetbereiche M₀, M₁, M₂, M₃ gleich. Die Magnetbereiche M₁, M₂, M₃ sind beidseitig von weit ausgedehnten Lückenbereichen begrenzt. Der Magnetbereich M₀ ist in Transportrichtung so weit ausgedehnt, dass der Magnetsensor 10 nur das Magnetsignal der gezeigten Magnetisierungsstufe am Anfang des Magnetbereichs M₀ erfasst. Unter gleichen Messbedingungen (d.h. bei gleichem Magnetsensor, gleicher Messgeometrie, gleichem Abstand zur Messspur, gleicher Transportgeschwindigkeit etc.) bewirken die verschiedenen Magnetbereiche M₀, M₁, M₂, M₃ verschiedene Magnetsignale S₀, S₁, S₂, S₃ mit unterschiedlichen Maximalamplituden I₀, I₁, I₂, I₃. Das Magnetsignal So der Magnetisierungsstufe des Magnetbereichs M₀ soll dabei als Referenz-Magnetsignal betrachtet werden.

Im Vergleich zur Maximalamplitude I₀ des Referenz-Magnetsignals S₀ weist der kurze Magnetbereich M₁ eine reduzierte Maximalamplitude I₁ auf, da sich die Magnetsignale der beiden sehr nah benachbarten Magnetisierungsstufen des Magnetbereichs M₁ zumindest teilweise gegenseitig auslöschen. Ausgehend von dem kurzen Magnetbereich M₁ führt eine größere Ausdehnung des Magnetbereichs in Transportrichtung des Sicherheitselements 2 zu einer Erhöhung der Maximalamplitude, da sich die einzelnen Magnetsignale der Magnetisierungsstufen am Anfang und Ende des vorbeitransportierten Magnetbereichs dann zumindest teilweise aufaddieren. Überschreitet die Maximalamplitude eines (im Vergleich zu M₁ etwas längeren) Magnetbereichs die Maximalamplitude I₀ des Referenz-Magnetsignals S₀, so ist dieses Magnetsignal durch konstruktive Interferenz erhöht. Beispielsweise ist das Magnetsignal S₂ des mittleren Magnetbereichs M₂ durch konstruktive Interferenz erhöht und besitzt eine sehr hohe Maximalamplitude I_{2,} die I₀ weit übertrifft. Bei einem relativ lang in Transportrichtung ausgedehnten Magnetbereich M₃ ergibt sich wiederum eine Reduzierung der Maximalamplitude I₃. Wird ab einer bestimmten Länge des Magnetbereichs die Maximalamplitude I₀ des Referenz-Magnetbereichs M₀ unterschritten, so ist das betreffende Magnetsignal nicht mehr durch konstruktive Interferenz erhöht.

In Figur 5e sind beispielhaft zwei Ausschnitte von Sicherheitselementen 2 mit einem magnetischen Teilbereich 15 gezeigt, bei dem die Maximalamplitude des Magnetsignals bei Vorbeitransportieren an dem Magnetsensor 10, durch konstruktive Interferenz erhöht ist. Der magnetische Teilbereich 15 besteht bei den Beispielen α und β jeweils aus einem ersten Magnetbereich 3 und einem zweiten Magnetbereich 5, die zu zwei Kodierungselementen A1 und B1' (Beispiel a) bzw. zu zwei Kodierungselementen B2 und A2 (Beispiel β) gehören können. Der magnetische Teilbereich 15 ist jeweils beidseitig von Lückenbereichen begrenzt. Bei den Beispielen α und β ist jeweils die Länge des magnetischen Teilbereichs 15 so gewählt, dass das Magnetsignal des magnetischen Teilbereichs 15 durch konstruktive Interferenz erhöht ist. Zu diesem Magnetsignal können auch weitere Magnetbereiche beitragen die im Anschluss an diese Lückenbereiche angeordnet sind (nicht gezeigt). Die Längen und Anordnungen dieser weiteren Magnetbereiche sind so gewählt, dass sich insgesamt für den magnetischen Teilbereich 15 ein durch konstruktive Interferenz erhöhtes Magnetsignal ergibt.

Zur Beurteilung, ob die Maximalamplitude des Magnetsignals des magnetischen Teilbereichs 15 durch konstruktive Interferenz erhöht ist, ist diese mit der Maximalamplitude eines Referenz-Magnetsignals zu vergleichen. Als Referenz-Magnetsignal dient beispielsweise das Magnetsignal So einer Magnetisierungsstufe eines in Transportrichtung lang ausgedehnten Magnetbereichs M₀, der die gleiche Magnetisierung wie der erste und der zweite Magnetbereich aufweist.

Der für eine konstruktive Interferenz erforderliche Ausdehnung des ersten und zweiten Magnetbereichs hängt entscheidend von der zeitlichen Breite der Magnetsignale der einzelnen Magnetisierungsstufen zum Anfang und Ende des vorbeitransportierten ersten und zweiten Magnetbereichs. Diese zeitliche Breite kann mehreren Einflussgrößen unterliegen und hängt im Allgemeinen von der Arbeitsweise, z.B. induktiv oder magnetoresistiv, und der Geometrie des verwendeten Magnetsensors ab. Im Fall des induktiv arbeitenden Magnetsensors 10 wird die Breite und Form des Magnetsignals z.B. durch die räumliche Ausdehnung des Erfassungsbereichs des Magnetsensors 10 beeinflusst. Sowohl die Anordnung als auch die Ausdehnung von Polschuhen, mit Hilfe derer der induktive Magnetsensor 10 funktioniert, spielen dabei eine Rolle. Außerdem hängt die Breite und Form des Magnetsignals auch von dem (senkrecht zur Transportrichtung gemessenen) Abstand zwischen dem vorbeitransportierten Sicherheitselement 2 bzw. Wertdokument 1 und dem Magnetsensor 10 ab. Die für eine konstruktive Interferenz der Magnetsignale erforderliche Länge des ersten und zweiten Magnetbereichs hängt also von der jeweiligen Realisierung der Magnetsignal-Messung ab und muss im Einzelfall experimentell bestimmt werden. Im gezeigten Beispiel des induktiven Magnetsensors 10 kann die für eine konstruktive Interferenz der Magnetsignale erforderliche Länge des ersten und zweiten Magnetbereichs bis zu 8 mm betragen.

## Patentansprüche

1. Sicherheitselement (2) zur Absicherung von Wertdokumenten (1), das zumindest zwei Lückenbereiche (24) und zumindest einen magnetischen Teilbereich (15) aufweist, die entlang einer vorgegebenen Richtung angeordnet sind, die Teile einer magnetischen Kodierung sind, wobei der magnetische Teilbereich (15) einen ersten Magnetbereich (3) und einen zweiten Magnetbereich (5) aufweist, die entlang der vorgegebenen Richtung unmittelbar zueinander benachbart sind, und wobei der magnetische Teilbereich (15) entlang der vorgegebenen Richtung durch zwei der Lückenbereiche (24) begrenzt ist, die erste und/oder zweite Lückenbereiche (4, 6) sind,
**dadurch gekennzeichnet,**
- **dass** der erste Magnetbereich (3) eine erste Koerzitivfeldstärke und der zweite Magnetbereich (5) eine zweite Koerzitivfeldstärke aufweist, die unterschiedlich sind, und
- **dass** die erste und zweite Koerzitivfeldstärke sich um mindestens einen Faktor 5 unterscheiden und
- **dass** das Sicherheitselement außerdem mehrere weitere Magnetbereiche der ersten Koerzitivfeldstärke und einen oder mehrere weitere Magnetbereiche der zweiten Koerzitivfeldstärke aufweist, die jeweils beidseitig von ersten und/oder zweiten Lückenbereichen begrenzt sind.

2. Sicherheitselement (2) nach Anspruch 1, **dadurch gekennzeichnet, dass** das Sicherheitselement (2) entlang der vorgegebenen Richtung mehrere voneinander beabstandete magnetische Teilbereiche (15) aufweist, zwischen denen insbesondere jeweils einer oder mehrere der Lückenbereiche (24) angeordnet sind.

3. Sicherheitselement (2) nach einem oder mehreren der vorhergehenden Ansprüche, **dadurch gekennzeichnet, dass** jeder der magnetischen Teilbereiche durch zwei erste Lückenbereiche (4) oder durch einen ersten Lückenbereich (4) und einen zweiten Lückenbereich (6) begrenzt ist.

4. Sicherheitselement (2) nach einem oder mehreren der vorhergehenden Ansprüche, **dadurch gekennzeichnet, dass** die Lückenbereiche (24) und der magnetische Teilbereich (15) Teile einer sich periodisch wiederholenden Anordnung (P) der magnetischen Kodierung sind.

5. Sicherheitselement (2) nach einem oder mehreren der vorhergehenden Ansprüche, **dadurch gekennzeichnet, dass** das Sicherheitselement (2) zumindest einen Ausschnitt aus einer magnetischen Kodierung aufweist, die zumindest ein erstes Kodierungselement (A1, A2) und zumindest ein zweites Kodierungselement (B1, B1', B2, B2') aufweist, die entlang einer vorgegebenen Richtung angeordnet sind, wobei das erste Kodierungselement (A1, A2) entlang der vorgegebenen Richtung durchgehend den ersten Magnetbereich (3) mit der ersten Koerzitivfeldstärke aufweist und wobei das zweite Kodierungselement (B1, B1', B2, B2') einen ersten Lückenbereich (4) und den zweiten Magnetbereich (5) mit einer zweiten Koerzitivfeldstärke aufweist, die sich von der ersten Koerzitivfeldstärke unterscheidet, wobei der erste Magnetbereich (3) entlang der vorgegebenen Richtung unmittelbar benachbart zu dem zweiten Magnetbereich (5) angeordnet ist und wobei die Summe der Längen des ersten Magnetbereichs (3) und des zweiten Magnetbereichs (5) entlang der vorgegebenen Richtung maximal 8 mm beträgt.

6. Sicherheitselement (2) nach Anspruch 5, **dadurch gekennzeichnet, dass** die magnetische Kodierung zumindest ein drittes Kodierungselement (L1, L2) aufweist, das zusammen mit dem ersten (A1, A2) und dem zweiten Kodierungselement (B1, B1', B2, B2') entlang der vorgegebenen Richtung angeordnet ist, wobei das dritte Kodierungselement (L1, L2) entlang der vorgegebenen Richtung durchgehend einen zweiten Lückenbereich (6) aufweist.

7. Sicherheitselement (2) nach einem oder mehreren der Ansprüche 5 bis 6, **dadurch gekennzeichnet, dass** der erste und zweite Magnetbereich (3, 5), vorzugsweise alle unmittelbar zueinander benachbarten ersten und zweiten Magnetbereiche (3, 5), entlang der vorgegebenen Richtung beidseitig durch erste und/oder durch zweite Lückenbereiche (4, 6) begrenzt sind.

8. Sicherheitselement (2) nach einem oder mehreren der Ansprüche 5 bis 7, **dadurch gekennzeichnet, dass** die magnetische Kodierung aus einer sich periodisch wiederholenden Anordnung (P) der Kodierungselemente besteht, bei der die Kodierungselemente entlang der vorgegebenen Richtung in einer vorgegebenen Reihenfolge angeordnet sind, wobei die sich periodisch wiederholenden Anordnung (P) insbesondere aus 6 bis 18 der Kodierungselemente, bevorzugt aus 8 bis 16 der Kodierungselemente, besonders bevorzugt aus 10 bis 14 der Kodierungselemente besteht.

9. Sicherheitselement (2) nach einem oder mehreren der vorhergehenden Ansprüche, **dadurch gekennzeichnet, dass** die Summe der Längen des ersten und zweiten Magnetbereichs (3, 5) entlang der vorgegebenen Richtung so gewählt ist, dass zwei Magnetsignale, die sich beim Vorbeitransportieren des Sicherheitselements (2) parallel oder entgegengesetzt zur vorgegebenen Richtung an einem Magnetsensor (10) zum Anfang und Ende des ersten und zweiten Magnetbereichs (3, 5) ergeben, konstruktiv miteinander interferieren.

10. Sicherheitselement (2) nach einem oder mehreren der vorhergehenden Ansprüche, **dadurch gekennzeichnet, dass** der erste und zweite Magnetbereich (3, 5) etwa die gleiche remanente Flussdichte aufweisen und/oder um maximal 10% voneinander verschiedene remanente Flussdichten.

11. Folienmaterial mit mindestens einem Sicherheitselement (2) nach einem oder mehreren der Ansprüche 1 bis 10, wobei das Folienmaterial insbesondere ein Transfermaterial ist.

12. Wertdokument (1) mit mindestens einem Sicherheitselement (2) nach einem oder mehreren der Ansprüche 1 bis 10, wobei das Wertdokument insbesondere eine Banknote oder ein Sicherheitsdokument oder eine Produktverpackung ist, oder Sicherheitspapier mit mindestens einem Sicherheitselement (2) nach einem oder mehreren der Ansprüche 1 bis 10.

13. Messanordnung mit mindestens einem Magnetsensor (10) und mindestens einem Wertdokument (1) nach Anspruch 12.

14. Messanordnung nach Anspruch 13, bei der das Vorbeitransportieren an dem Magnetsensor (10) im Wesentlichen entlang oder entgegengesetzt zur vorgegebenen Richtung erfolgt, **dadurch gekennzeichnet, dass** eine Maximalamplitude (I₂) zumindest eines Magnetsignals (S₂), das sich durch Vorbeitransportieren des Sicherheitselements (2) an dem Magnetsensor (10) ergibt, durch konstruktive Interferenz erhöht ist, wobei das Magnetsignal (S₂) insbesondere das Magnetsignal des ersten (3) und zweiten Magnetbereichs (5) ist.

15. Verfahren zur Prüfung von Wertdokumenten nach Anspruch 12 mit den Schritten:
- Vorbeitransportieren zumindest eines der Wertdokumente (1) nach Anspruch 12 an einem Magnetsensor (10) zur Messung von magnetischen Eigenschaften des Wertdokuments (1),
- Aufnahme von Magnetsignalen des Sicherheitselements (2) mit Hilfe des Magnetsensors (10),
wobei vorzugsweise eine Maximalamplitude (I₂) zumindest eines Magnetsignals (S₂) des Sicherheitselements (2), insbesondere eines Magnetsignals (S₂) des ersten und zweiten Magnetbereichs (3, 5), durch konstruktive Interferenz erhöht ist.

## Claims

1. A security element (2) for securing value documents (1), having at least two gap regions (24) and at least one magnetic partial region (15), which are arranged along a predetermined direction, which form part of a magnetic coding, wherein the magnetic partial region (15) has a first magnetic region (3) and a second magnetic region (5), which are directly mutually adjacent along the predetermined direction, and wherein the magnetic partial region (15) is limited along the predetermined direction by two of the gap regions (24), which are first and/or second gap regions (4, 6),
**characterized in that**
- the first magnetic region (3) has a first coercive field strength and the second magnetic region (5) has a second coercive field strength, which are different, and
- that the first and the second coercive field strengths differ from one another by at least a factor 5 and
- that the security element additionally has several further magnetic regions of the first coercive field strength and one or several further magnetic regions of the second coercive field strength, which are limited in each case on both sides by first and/or second gap regions.

2. The security element (2) according to claim 1, **characterized in that** the security element (2) has along the predetermined direction several mutually spaced-apart magnetic partial regions (15), between which in particular one or several of the gap regions (24) are arranged in each case.

3. The security element (2) according to one or several of the preceding claims, **characterized in that** each of the magnetic partial regions is limited by two first gap regions (4) or by one first gap region (4) and one second gap region (6).

4. The security element (2) according to one or several of the preceding claims, **characterized in that** the gap regions (24) and the magnetic partial region (15) are parts of a periodically recurring arrangement (P) of the magnetic coding.

5. The security element (2) according to one or several of the preceding claims, **characterized in that** the security element (2) has at least one portion of a magnetic coding that has at least one first coding element (A1, A2) and at least one second coding element (B1, B1', B2, B2') which are arranged along a predetermined direction, wherein the first coding element (A1, A2) along the predetermined direction continuously has the first magnetic region (3) with the first coercive field strength and wherein the second coding element (B1, B1', B2, B2') has a first gap region (4) and the second magnetic region (5) with a second coercive field strength that differs from the first coercive field strength, wherein the first magnetic region (3) along the predetermined direction is arranged directly adjacent to the second magnetic region (5) and wherein the sum of the lengths of the first magnetic region (3) and of the second magnetic region (5) along the predetermined direction amounts to a maximum of 8 mm.

6. The security element (2) according to claim 5, **characterized in that** the magnetic coding has at least one third coding element (L1, L2) which, together with the first (A1, A2) and the second coding elements (B1, B1', B2, B2'), is arranged along the predetermined direction, wherein the third coding element (L1, L2) along the predetermined direction continuously has a second gap region (6).

7. The security element (2) according to one or several of the preceding claims, **characterized in that** the first and the second magnetic regions (3, 5), preferably all directly mutually adjacent first and second magnetic regions (3, 5), along the predetermined direction are limited on both sides by first and/or by second gap regions (4, 6).

8. The security element (2) according to one or several of claims 5 to7, **characterized in that** the magnetic coding is composed of a periodically recurring arrangement (P) of the coding elements, in which the coding elements are arranged along the predetermined direction in a predetermined order, wherein the periodically recurring arrangement (P) in particular is composed of 6 to 18 of the coding elements, preferably of 8 to 16 of the coding elements, particularly preferably of 10 to 14 of the coding elements.

9. The security element (2) according to one or several of the preceding claims, **characterized in that** the sum of the lengths of the first and second magnetic regions (3, 5) along the predetermined direction is chosen in such a fashion that two magnet signals that result at the start and end of the first and second magnetic regions (3, 5) when the security element (2) is transported past a magnet sensor (10) parallel or contrary to the predetermined direction interfere with each other constructively.

10. The security element (2) according to one or several of the preceding claims, **characterized in that** the first and the second magnetic region (3, 5) have approximately the same remanent flux density and/ or have remanent flux densities that differ from one another by a maximum of 10%.

11. A foil material with at least one security element (2) according to one or several of claims 1 to 10, wherein the foil material in particular is a transfer material.

12. A value document (1) with at least one security element (2) according to one or several of claims 1 to 10, wherein the value document in particular is a bank note or a security document or a product packaging, or security paper with at least one security element (2) according to one or several of claims 1 to 10.

13. A measurement setup with at least one magnet sensor (10) and at least one value document (1) according to claim 12.

14. The measurement setup according to claim 13, in which the transporting past the magnet sensor (10) is effected substantially along or contrary to the predetermined direction, **characterized in that** a maximum amplitude (I₂) of at least one magnet signal (S₂) resulting through transporting the security element (2) past the magnet sensor (10), is increased by constructive interference, wherein the magnet signal (S₂) in particular is the magnet signal of the first (3) and second magnetic regions (5).

15. A method for checking value documents according to claim 12 with the steps of:
- transporting at least one of the value documents (1) according to claim 12 past a magnet sensor (10) for measuring magnetic properties of the value document (1),
- receiving magnet signals of the security element (2) with the aid of the magnet sensor (10),
wherein preferably a maximum amplitude (I₂) at least of one magnet signal (S₂) of the security element (2), in particular of a magnet signal (S₂) of the first and second magnetic regions (3, 5) is increased by constructive interference.

## Revendications

1. Élément de sécurité (2) destiné à la sécurisation de documents de valeur (1), lequel comporte au moins deux zones d'interstices (24) et au moins une zone magnétique partielle (15) qui sont agencées le long d'une direction prédéterminée, qui sont des parties d'une codification magnétique, cependant que la zone magnétique partielle (15) comporte une première zone magnétique (3) et une deuxième zone magnétique (5) qui sont directement adjacentes l'une à l'autre le long de la direction prédéterminée, et cependant que la zone magnétique partielle (15) est limitée le long de la direction prédéterminée par deux des zones d'interstices (24) qui sont des premières et/ou deuxièmes zones d'interstices (4, 6),
**caractérisé en ce**
- **que** la première zone magnétique (3) présente une première force de champ coercitive et que la deuxième zone magnétique (5) présente une deuxième force de champ coercitive qui sont différentes, et
- **que** la première et la deuxième force de champ coercitive se différencient d'au moins un facteur 5, et
- **que** l'élément de sécurité comporte en outre plusieurs autres zones magnétiques de la première force de champ coercitive et une ou plusieurs autres zones magnétiques de la deuxième force de champ coercitive qui sont respectivement limitées des deux côtés par des premières et/ou deuxièmes zones d'interstices.

2. Élément de sécurité (2) selon la revendication 1, **caractérisé en ce que** l'élément de sécurité (2) comporte le long de la direction prédéterminée plusieurs zones magnétiques partielles (15) espacées les unes des autres entre lesquelles en particulier respectivement une ou plusieurs des zones d'interstices (24) sont agencées.

3. Élément de sécurité (2) une ou plusieurs des revendications précédentes, **caractérisé en ce que** chacune des zones magnétiques partielles est limitée par deux premières zones d'interstices (4) ou par une première d' interstices (4) et une deuxième zone d'interstices (6).

4. Élément de sécurité (2) selon une ou plusieurs des revendications précédentes, **caractérisé en ce que** les zone d'interstices (24) et la zone magnétique partielle (15) sont des parties d'un agencement (P) se répétant périodiquement de la codification magnétique.

5. Élément de sécurité (2) selon une ou plusieurs des revendications précédentes, **caractérisé en ce que** l'élément de sécurité (2) comporte au moins un segment d'une codification magnétique qui comporte au moins un premier élément de codification (A1, A2) et au moins un deuxième élément de codification (B1, B1', B2, B2') agencés le long d'une direction prédéterminée, cependant que le premier élément de codification (A1, A2) comporte le long de la direction prédéterminée en continu la première zone magnétique (3) ayant la première force de champ coercitive, et cependant que le deuxième élément de codification (B1, B1', B2, B2') comporte une première zone d'interstices (4) et la deuxième zone magnétique (5) ayant une deuxième force de champ coercitive qui se différencie de la première force de champ coercitive, cependant que la première zone magnétique (3) est agencée le long de la direction prédéterminée de manière directement adjacente à la deuxième zone magnétique (5), et cependant que la somme des longueurs de la première zone magnétique (3) et de la deuxième zone magnétique (5) le long de la direction prédéterminée est d'au maximum 8 mm.

6. Élément de sécurité (2) selon la revendication 5, **caractérisé en ce que** la codification magnétique comporte au moins un troisième élément de codification (L1, L2) qui, conjointement avec le premier (A1, A2) et le deuxième élément de codification (B1, B1', B2, B2'), est agencé le long de la direction prédéterminée, cependant que le troisième élément de codification (L1, L2) comporte le long de la direction prédéterminée en continu une deuxième zone d'interstices (6).

7. Élément de sécurité (2) selon une ou plusieurs des revendications de 5 à 6, **caractérisé en ce que** la première et la deuxième zone magnétique (3, 5), de préférence toutes les premières et deuxièmes zones magnétiques (3, 5) directement adjacentes les unes aux autres, sont, le long de la direction prédéterminée, limitées des deux côtés par des premières et/ou par des deuxièmes zones d'interstices (4, 6).

8. Élément de sécurité (2) selon une ou plusieurs des revendications de 5 à 7, **caractérisé en ce que** la codification magnétique consiste en un agencement (P) se répétant périodiquement des éléments de codification, dans lequel les éléments de codification sont agencés le long de la direction prédéterminée dans un ordre prédéterminé, cependant que l'agencement (P) se répétant périodiquement consiste en particulier en 6 à 18 des éléments de codification, de préférence en 8 à 16 des éléments de codification, particulièrement de préférence en 10 à 14 des éléments de codification.

9. Élément de sécurité (2) selon une ou plusieurs des revendications précédentes, **caractérisé en ce que** la somme des longueurs de la première et de la deuxième zone magnétique (3, 5) le long de la direction prédéterminée est choisie de telle façon que deux signaux magnétiques qui se produisent lors du transport de l'élément de sécurité (2) passant par un capteur magnétique (10) parallèlement ou inversement à la direction prédéterminée au début et à la fin de la première et de la deuxième zone magnétique (3, 5) interfèrent constructivement l'un avec l'autre.

10. Élément de sécurité (2) selon une ou plusieurs des revendications précédentes, **caractérisé en ce que** la première et la deuxième zone magnétique (3, 5) ont environ la même densité de flux rémanente et/ou des densités de flux rémanentes différentes d'au maximum 10 % l'une de l'autre.

11. Matériau en feuille comportant au moins un élément de sécurité (2) selon une ou plusieurs des revendications de 1 à 10, cependant que le matériau en feuille est en particulier un matériau de transfert.

12. Document de valeur (1) comportant au moins un élément de sécurité (2) selon une ou plusieurs des revendications de 1 à 10, cependant que le document de valeur est en particulier un billet de banque ou un document de sécurité ou un emballage de produit, ou un papier de sécurité comportant au moins un élément de sécurité (2) selon une ou plusieurs des revendications de 1 à 10.

13. Agencement de mesure comportant au moins un capteur magnétique (10) et au moins un document de valeur (1) selon la revendication 12.

14. Agencement de mesure selon la revendication 13, dans lequel le transport passant par le capteur magnétique (10) a lieu essentiellement le long ou inversement à la direction prédéterminée, **caractérisé en ce qu'**une amplitude maximale (I₂) d'au moins un signal magnétique (S₂) qui se produit par le transport de l'élément de sécurité (2) passant par le capteur magnétique (10) est augmentée par interférence constructive, cependant que le signal magnétique (S₂) est en particulier le signal magnétique de la première (3) et de la deuxième zone magnétique (5).

15. Procédé de vérification de documents de valeur selon la revendication 12, comprenant les étapes :
- transport, passant par un capteur magnétique (10), d'au moins un des documents de valeur (1) selon la revendication 12 pour la mesure de propriétés magnétiques du document de valeur (1),
- enregistrement de signaux magnétiques de l'élément de sécurité (2) à l'aide du capteur magnétique (10),
cependant que, de préférence, une amplitude maximale (I₂) d'au moins un signal magnétique (S₂) de l'élément de sécurité (2), en particulier d'un signal magnétique (S₂) de la première et de la deuxième zone magnétique (3, 5), est augmentée par interférence constructive.
